# EUROPEAN PATENT SPECIFICATION

(11) **EP 3 644 467 B1**
(45) Date of publication and mention of the grant of the patent: **14.12.2022**
(21) Application number: 18202705.2
(22) Date of filing: 25.10.2018
(51) Int. Cl.: H02G 9/10, H02G 15/10

(54) **SEALED DIVING BELL LID AND CONDENSATION CONTROL FOR LOW-VOLTAGE LINK BOXES**
ABGEDICHTETER TAUCHGLOCKENDECKEL UND KONDENSATIONSKONTROLLE FÜR NIEDERSPANNUNGSVERBINDUNGSKÄSTEN
COUVERCLE DE CLOCHE DE PLONGÉE ÉTANCHE ET RÉGULATION DE LA CONDENSATION DE BOÎTIERS DE LIAISON BASSE TENSION

(43) Date of publication of application: 29.04.2020
(73) Proprietor: Tyco Electronics UK Ltd, Wiltshire SN3 5HH (GB)
(72) Inventor: Barnett, Gary, Ashby de la Zouch, Leicestershire LE65 1JH (GB)
(74) Representative: Grünecker Patent- und Rechtsanwälte PartG mbB

(56) References cited:
- WO-A1-2009/055847
- DE-U- 1 888 659
- GB-A- 2 480 872
- JP-B2- 3 287 338
- US-A1- 2004 072 469

## Description

The invention relates to an underground link box for connecting and/or switching adjacent sections of at least two low-voltage cables, the underground link box comprising an outer housing body; an inner phase housing for receiving electric connection links linking the at least two low-voltage cables, the phase housing being received within the housing body and having an access opening; and a diving bell lid arranged between the outer housing body and the inner phase housing, wherein the diving bell lid is open in a downward direction, wherein the diving bell lid comprises an upper wall opposite its opening, and wherein the diving bell lid is adapted to receive the phase housing underneath the upper wall and wherein a condensate protection cover is provided between the access opening of the phase housing and the upper wall of the diving bell lid as a cover for the access opening.

Underground link boxes are known from the art and are applied for connecting at least two cables with each other, wherein the cable connection remains accessible. The underground link box is buried below earth surface level, wherein the outer housing body is preferably flush with the earth surface. Low-voltage link boxes, which are also known as low-voltage link disconnecting boxes provide exposed electrical contacts within the inner phase housing, wherein said electrical contacts need to be kept dry to prevent a short-circuit occurring due to moisture ingress.

The most common protection against moisture ingress are diving bells which maintain a pocket of air underneath themselves. Diving bell lids are kept in place when submerged through their own weight, as they are usually made of cast iron.

However, when exposed to humidity, a diving bell lid may cause condensation forming. Overtime, this condensation decreases life expectancy of the underground link box.

Although known underground link boxes comprise a plurality of measures that should prevent moisture ingress into the phase housing, it has nonetheless been observed that, in practice, many underground link boxes fail due to moisture ingress into the phase housing. It is therefore an object of the invention to improve underground link boxes such that moisture ingress into the phase housing can be reduced, correspondingly the services time can be increased.

DE 18 88 659 U concerns a protective device for amplifier housings in electrical communication technology. The protective device consists of a lower part adapted to be arranged underground. The protective device further comprises a diving bell lid to be put over the amplifier housing to protect the removable cover from water.

WO 2009/055847 A1 discloses a link box arrangement for interconnecting sector cables. The arrangement includes a bell housing, which is used to protect a switch from moisture.

An electrical cable interconnection system for interconnecting stripped ends of at least two multiphase high current, low voltage input cables is disclosed in US 2004/072469 A1.

JP 3 287338 B2 concerns control equipment having an installation main body attached to an upper surface of a support stand and having a storage container, which accommodates the installation main body.

A further link box assembly is shown in GB 2 480 872 A. The link box assembly comprises a base, at least one chamber body and a lid.

This object is solved according to the invention for the underground link box mentioned in the beginning in that the condensate protection cover is fixed to the diving bell lid.

Preferably, i.e. when the underground link box is correctly installed, the access opening opens in an upward direction and the opening of the diving bell lid opens in a downward direction. More preferably, the downward direction essentially corresponds to the direction of gravity, which is the case if an underground link box is correctly installed, i.e. levelled.

The upper wall of the diving bell may be understood as a ceiling of the diving bell.

The openings of the diving bell and the inner phase housing therefore face in opposite directions.

The diving bell, in particular a diving bell made of a polymer or cast-iron material, may be understood as an intermediate housing which finally provides the protection against moisture ingress into the inner phase housing. A cast-iron diving bell is held in place by its weight if submerged, i.e. it does not float due to air provided beneath the diving bell. A polymer diving bell may require additional fixation means for holding it in place when submerged in water.

The diving bell may comprise any other waterproof/robust material.

In the following, further exemplary and advantageous embodiments of the inventive underground link box will be described. Individual technical features of the following embodiments may be arbitrarily combined with each other, wherein individual technical features may be omitted if the technical effect achieved with the omitted technical feature is not essential to the present invention.

The outer housing may comprise a lower housing part and an upper housing part, wherein the lower housing part and upper housing part may be attached to each other such that cable openings at two ends are provided. Through said cable openings one or two cables may be received from each side of the underground link box and may be contacted with each other in the inner phase housing. The underground link box may be a two-way link box or a four-way link box. Preferably, each cable is adapted to transmit three phase alternating current, such that the inner phase housing connects three or four single conductors of an inbound three or four core cable with three or four individual conductors of an outbound three or four core cable. Accordingly, a two -way link box connects 2x3 conductors (3 core) or 2x4 conductors (4 core) from the inbound side to 2x3 conductors (3 core) or 2x4 conductors (4 core) to the outbound side. A four-way link box connects 4x3 conductors (3 core) or 4x4 conductors (4 core) from the inbound side to 4x3 conductors (3 core) or 4x4 conductors to the outbound side.

The condensate protection cover has the advantage that condensed water, which may occur if the diving bell is submerged (e.g. after heavy rain), may form droplets at the upper wall, which may fall off into the inner phase housing. In order to prevent such condensed water to enter the inner phase housing, the condensate protection cover is provided above the access opening, thereby preventing the condensed water to drip off the upper wall into the inner phase housing.

Thus, damage of the underground link box by a short-circuit (which may result in an explosion) is avoided by the condensate protection cover, which increases the safety of the inventive underground link box.

Thus, even if the above-mentioned powder coating of the diving bell lid is damaged (this may increase a tendency for condensation), condensed water dripping off the upper wall of the diving bell lid may not enter the inner phase housing. Consequently, handling of the underground link box is rendered easier, as a diving bell lid with damaged coatings, the damage being overlooked, may be applied without an increased probability of a catastrophic damage of the underground link box.

In a further advantageous embodiment of the inventive underground link box a footprint of the condensate protection cover may be larger than a footprint of the access opening covered by the condensate protection cover. The footprint is to be understood as a ground area, floor area or surface area of the corresponding element in a projection along the downward direction. A footprint of the condensate protection cover being larger than the footprint of the access opening guarantees that condensed water that dripped from the upper wall of the diving bell lid onto the condensate protection cover is guided to a position away from the inner phase housing where, when dripping off the condensate protection cover, the condensed water does not enter the inner phase housing but drops down at a side of it.

The condensate protection cover may thus extend beyond the phase housing in a plane perpendicular to the downward direction.

The inventive underground link box may be further improved if the condensate protection cover is located and fixed at a distance from the upper wall and/or the access opening. Placing the condensate protection cover at a distance to the upper wall and the access opening renders air circulation inside the diving bell lid possible.

Further, if the condensate protection cover is located at a distance from the diving bell lid, a transmission of heat between both elements is reduced, such that in general, the diving bell lid will have a lower temperature than the condensate protection cover. Condensation therefore preferably occurs at the upper wall of the diving bell lid.

In another advantageous embodiment, the condensate protection cover contains a polymer which is less susceptible to condensation due to its lower thermal conductivity compared with the metallic diving bell lid.

The phase housing may comprise a plurality of walls which may form the access opening. In the case of a two-way link box, the phase housing may comprise for outer walls and two inner separation walls, such that three sub-chambers (also: phase pocket; for each of the three phases of the three-phase alternating current) are located preferably adjacent to each other. Correspondingly, a four-way link box may comprise four of those structures described above or may comprise four outer walls of the phase housing with five inner walls separating the twelve sub-chambers from each other. The sub-chambers are sometimes referred to as "pockets". A two-way link box has three open phase housings, a four-way link box has twelve of these. The inner phase housing may further comprise an electrical contact for contacting neutral by a neutral conductor and/or earth (electrical grounding/earthing).

The condensate protection cover may in particular extend beyond said walls of the phase housing at any direction in the plane perpendicular to the downward direction.

The underground link box according to the present invention may be further improved in that an upward facing side of the condensate protection cover may be inclined with respect to a direction perpendicular to the downward direction. Such an inclination of the condensate protection member (in particular its upper side) easily guides condensed water that dripped from the upper wall of the diving bell lid onto the condensate protection cover away from the inner phase housing for dropping off the condensate protection member at a side of the inner phase housing.

The condensate protection member may be inclined into one direction as compared to the downward direction or may comprise different sections inclined at different angles. The absolute value of the angles may be the same. In particular, the condensate protection member may comprise two or even four inclined sections of its upper side, wherein the highest point of all of said inclined sections may at the same time be a point where all inclined sections are connected to each other, wherein said highest point is preferentially centered with respect to the diving bell lid as seen along the upward or downward direction. Said highest point may be a line similar to a roof ridge or apex.

Preferably, the diving bell lid and the condensate protection cover show a similar or even same inclination, such that a distance between the upper wall of the diving bell lid and the condensate protection member may be kept constant over the whole extent of the upper wall.

In a further advantageous embodiment of the underground link box, the condensate protection cover may comprise a drip edge. The drip edge may prevent water that is guided to the edge of the condensate protection cover from creeping around the edge of the condensate protection cover and along the lower side of it towards the inner phase housing. Such creeping of water is due to the surface tension.

The drip edge may be understood as a downward bent circumferential edge or a protrusion, which protrudes from the edge of the condensate protection member in the downward direction.

It is advantageous that if- the condensate protection cover is fixed to the diving bell lid. This renders installation, in particular correct placement of the condensate protection cover, particularly easy and highly facilitates installation of the underground link box. With such an embodiment of the inventive underground link box, it is sufficient to place the diving bell lid over the inner phase housing for simultaneously correctly positioning the condensate protection cover. Is to be noted that diving bell lids are adjusted during installation by means of edges and adjustment members provided in the lower part of the housing body, which allow a maximum tolerance of the position of the diving bell lid of approximately 5 mm. The condensate protection cover may be fixed to the diving bell lid by means of screws, adhesives, a positive lock, e.g. a dove tail connection, and other well-known means of the art.

In a particularly advantageous embodiment of the inventive underground link box, in an assembled state of the diving bell lid, the condensate protection cover bears on frame walls of the phase housing, the frame walls forming the access opening. The frame walls correspond to the above mentioned outer walls of the inner phase housing. The assembled state of the diving bell lid is to be understood as the state in which the diving bell lid is correctly placed over the inner phase housing and is adjusted in its correct final position with respect to the outer housing body. The inventive underground link box may be further improved in that at least one sealing agent may be provided between the frame walls and the condensate protection cover for sealing the phase housing. The sealing agent may in particular be provided between the condensate protection cover and an upper rim of the frame walls, the upper rim facing in the upward direction providing a sealing agent, effectively sealing the inner phase housing, in particular its individual phase pockets, wherein the sealing agent may render the inner phase housing air-tight.

This embodiment has the striking advantage that the inner phase housing is completely sealed, such that a waterproof inner phase housing is even provided if the underground link box is not installed in accordance with its specifications. That is, even if an underground link box installed is not levelled, i.e. tilted, it may provide an inner phase housing protected against water ingress, even if a water level inside the diving bell lid rises above the upper rim of the frame walls due to an inclination of the entire underground link box.

Such an embodiment may also be advantageous if polymer diving bell lids, i.e. non-cast iron diving bell lids, are applied. Such a polymer diving bell lid may show damage and thus, if submerged, may allow the encapsulated air under the diving bell lid to escape from it, thus allowing a water level inside the diving bell lid to rise above the upper rim of the frame walls. The sealing agent may, at least to a certain extent, protect the inventive underground link box against moisture ingress even if such a fatal error of the polymer diving bell lid occurs. This embodiment thus provides a redundancy in moisture ingress protection.

The sealing agent may form at least one continuous circumferential structure being complementary to an upper contour, i.e. a contour of the upper rim, of the frame walls, the upper contourfacing towards the diving bell lids. In particular, the sealing agent may only seal the outer walls, the frame walls, of the inner phase housing. This has the advantage that not the entire footprint of the inner phase housing needs to be sealed, but only the upper rim of the frame walls along said contour.

In a further advantageous embodiment, a footprint of the at least one sealing agent may be larger than a footprint of the frame walls. Thus, it is prevented that water may enter in between a small gap between the upper rim of the frame walls and the condensate protection cover.

The footprint of the walls is to be understood as a projection of the walls in a downward direction, wherein the bottom of the phase housing is not considered. Such a footprint of the frame walls therefore may be understood as a rectangle with thick bordering lines.

In another advantageous embodiment of the inventive underground link box the at least one sealing agent may be received in a groove of the condensate protection cover. Such a groove may facilitate installation of the sealing agent and may guarantee an easy adjustment of the position of the sealing agent with respect to the condensate protection cover and/or the diving bell lid.

The inventive underground link box may be further improved in that the sealing agent comprises at least one of the following list of sealing members and sealing materials: an O-ring; RAYGEL^{™}; a re-usable seal; silicone gel; and rubber.

In particular RAYGEL^{™} is an advantageous material for the sealing agent, as it is re-usable/re-enterable, i.e. that this particular gel will form a seal even if the mating surfaces become slightly damaged. Such a damage may easily occur if the technician installing the underground link box stands on the upper rim of the inner phase housing during installation. This may lead to minor scratches and damage of the upper rim of the frame walls, which may render an air-tight sealing by means of the sealing agent difficult if conventional means of sealing, e.g. rubber, are applied. RAYGEL^{™} has a sufficient viscosity in order to compensate for such tiny damages of the upper rim of the frame walls. Seal damage may therefore effectively be prevented.

In another advantageous embodiment of the inventive underground link box a plurality of separate sealing agents may be provided, each of which forming a continuous circumferential substructure being complementary to a corresponding upper sub-contour of the frame walls. This embodiment may in particular be applied if a four-way link box is considered, wherein one separate sealing agent seals a first portion of the inner phase housing in which the three phases of a first cable are electrically contacted to the three phases of a second cable and a second separate sealing agent which seals a second portion of the inner phase housing in which the three phases of a third cable are electrically contacted to the three phases of a fourth cable.

In all of the above described embodiments, it is advantageous if at least one water sluice is provided, which connects an upper volume portion of the diving bell lid located between the condensate protection cover and the upper wall with a lower volume portion of the diving bell lid located in downward direction below the condensate protection cover. The sluice or waterway/water outlet/drain opening is to be understood as a channeling means for draining condensed water formed on the upper side of the condensate protection cover to the lower portion of the diving bell lid. The lower portion is preferably located below the upper rim of the inner phase housing.

A simple means for providing such sluice ways is by providing fixation means only at individual positions and not over the whole upper wall of the diving bell lid, such that the condensed water may be drained between the fixation means from a portion above the condensate protection cover to a portion below the condensate protection cover. The lower volume portion may be located around the phase housing, i.e. outside the frame walls.

The condensate protection cover may be manufactured as a one-piece molding member.

The condensate protection cover may also be referred to as an inner liner.

In the following, the present invention will be described by way of exemplary examples using the accompanying figures. In the figures, individual embodiments will be shown and described, wherein said figures are to be understood as exemplary embodiments not limiting the present invention to these specific embodiments. The technical features shown in the figures may be arbitrarily combined and even omitted if the technical effect obtained by the omitted technical feature is not essential to the present invention. In the figures, the same elements and elements having the same technical function will be referred to with the same reference numeral. A repetition of the description of similar technical features in different figures will be avoided, whereas differences between the embodiments shown in different figures will be clearly given in the following figure description.

In the figures, the following is shown:
- Fig. 1: a first embodiment of an underground link box according to the invention in an assembled state;
- Fig. 2: a close-up view of the underground link box of Fig. 1;
- Fig. 3: a side view of a second embodiment of the inventive diving bell lid;
- Fig. 4: a bottom view of the diving bell lid of Fig. 3;
- Fig. 5: a side view of a third embodiment of the inventive diving bell lid;
- Fig. 6: a bottom view of the diving bell lid of Fig. 5;
- Fig. 7: a side view of a fourth embodiment of the inventive diving bell lid;
- Fig. 8: a bottom view of the diving bell lid of Fig. 7;
- Fig. 9: a lower housing part for assembly with the inventive diving bell lid of Fig. 7 and Fig. 8; and
- Fig. 10: the lower housing part of Fig. 9 with the inventive diving bell lid of Fig. 7 and Fig. 8 assembled.

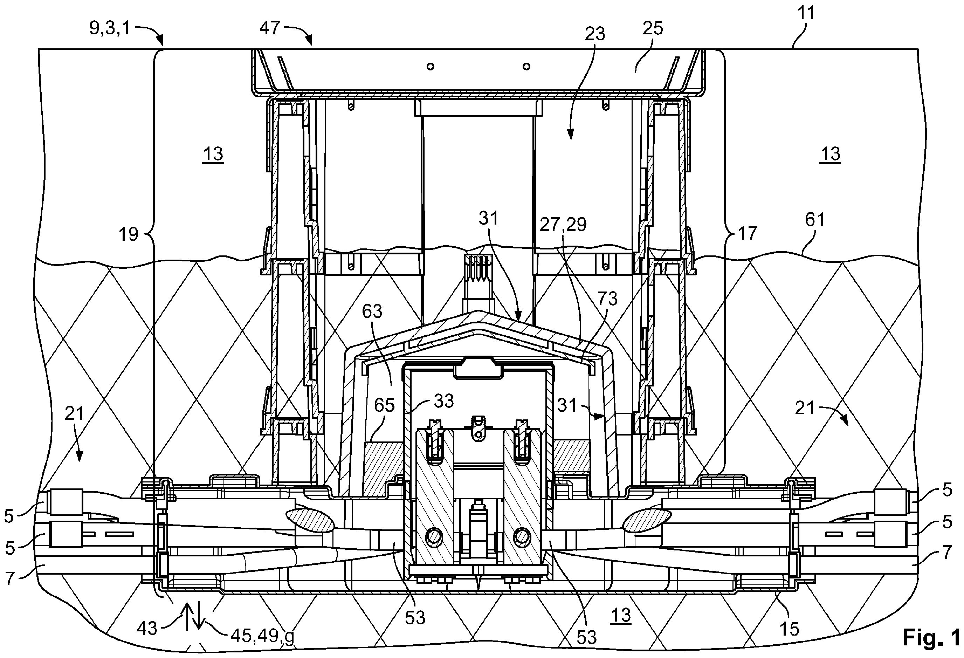

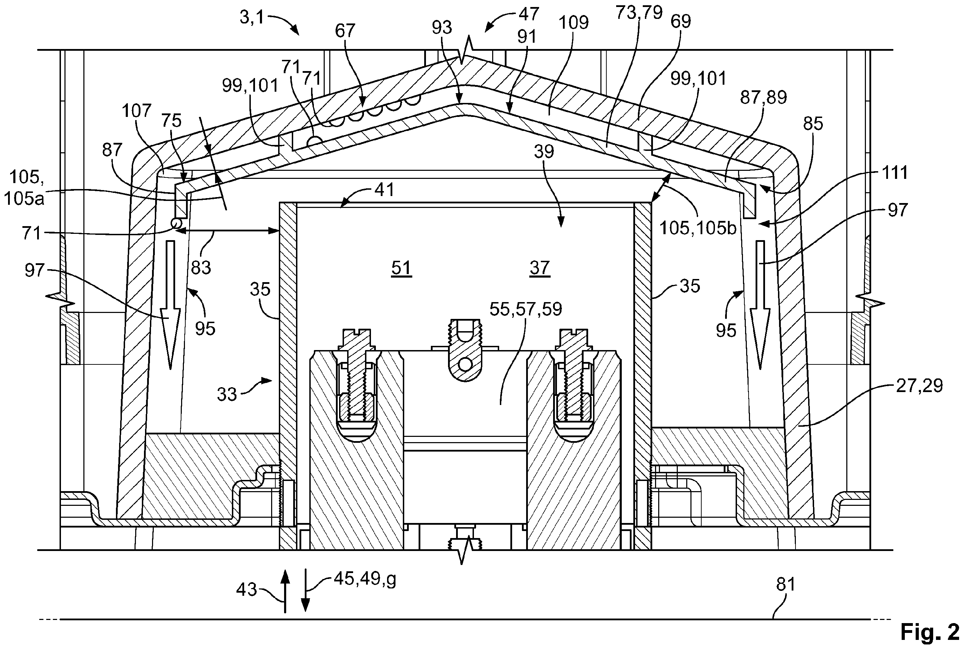

In Figs. 1 and 2 a first embodiment of the inventive underground link box 1 is shown in a schematic side view and an enlarged view, respectively.

The underground link box 1, which may also be called low voltage link disconnecting box, represents a connection means 3 for establishing electrical contact between at least two low-voltage cables 5.

In Fig.1 an exemplary number of two low-voltage cables 5 is shown on each side of the underground link box 1.

In addition, a grounding cable 7 is also received from each side of the underground link box 1. The underground link box shown in Figs. 1 and 2 is therefore a two -way underground link box 9 for connecting and/or switching of adjacent sections 21 of the at least two low-voltage cables 5. The labeling of the adjacent sections 21 is arbitrary, i.e. they will not be distinguished in the following description and are therefore referred to by the same reference numeral.

The underground link box 1 is installed below a ground level 11, i.e. underground, and is surrounded by backfill or ground 13.

The underground link box 1 is comprised of a lower housing part 15 and an upper housing part 17, which form an outer housing 19 of the underground link box 1. The upper housing part 17 may be fixed to the lower housing part 15 and may be accessible via a maintenance manhole/shaft 23 via a removable manhole cover 25.

In the maintenance manhole 23, i.e. inside the outer housing 19, a diving bell lid/bell cover 27 is provided, which, in the embodiment shown, comprises cast iron 29 and provides an insulation coating 31 provided on the surface of the diving bell lid 27.

Underneath the diving bell lid 27 an inner phase housing 33 is provided, which comprises outer walls, also referred to as frame walls 35 and inner separation walls 37.

The frame walls 35 surround an interior 39 of the inner phase housing 33 which is accessible via an access opening 41 that opens in an upward direction 43 directed opposite a downward direction 45. In an assembled state 47 of the underground link box 1, the downward direction 45 preferably corresponds to the direction of gravity 49.

The frame walls 35 and the inner separation walls 35 form phase pockets 51, which are adapted to receive electric connection means/links 55 (e.g. busbars 57 or current bridges 59), which connect two conductors 53, each provided by one of the at least two low-voltage cables 5, with each other. Thus, the phase pocket 51 receives the electric connection means 55, which are accessible via the access opening 41 and which are protected on the sides by the frame walls 35 and/or the inner separation walls 37.

Fig. 1 further shows an outside water level 61 and a coarse hatching, wherein in the case shown in the figure, the diving bell lid 27 is entirely submerged below said outside water level 61. However, because of air 63 below the diving bell lid 27, an inner water level 65 is maintained below (with respect to the downward direction 45) the access opening 41 of the inner phase housing 33. The water inside the diving bell lid 27 is indicated by a fine hatching.

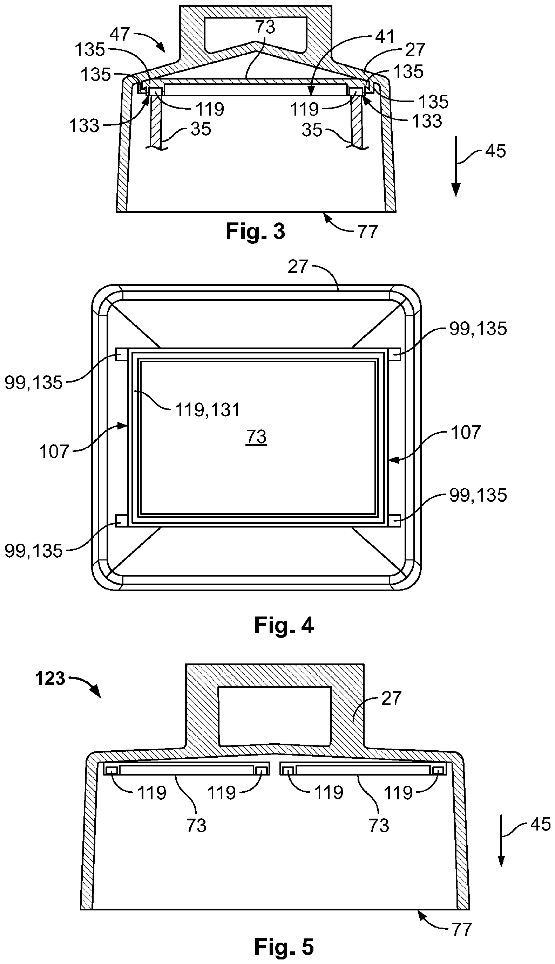

Such an open design of the diving bell lid 27 may result in condensation 67 occurring at an upper wall 69 of the diving bell lid 27. The condensation 67 is indicated by droplets of water 71 formed at the upper wall 69 in Fig. 2. The upper wall 69 is arranged opposite an opening 77 of the diving bell lid 27. Please refer to Figs. 3, 5 and 7 for said opening 77.

Due to gravity g acting along the direction of gravity 49, said droplets 71 may fall off the upper wall 69, wherein, in the inventive underground link box 1 shown in the figures, the droplet 71 is prevented from entering the phase pocket 51 of the inner phase housing 33 by means of a condensate protection cover 73. One of such droplets 71 that fell off the upper wall 69 is shown in Fig. 2 resting on an upper side 75 of the condensate protection cover 73.

The condensate protection cover 73 is provided between the access opening 41 of the phase housing 33 and the upper wall 69 of the diving bell lid 27. The condensate protection cover 73 therefore acts as a cover 79 for the access opening 41.

In a plane 81 perpendicular to the downward direction 45 (the plane 81 is shown as a line in Fig. 2; further, the plane 81 is placed below the underground link box 1 for the sake of visibility), the condensate protection member 73 extends beyond the phase housing 33, which is shown by an overhang distance 83.

At an edge 85 of the condensate protection cover 73, a drip edge 87 is provided. The drip edge 87 is to be understood as a protrusion 89, which protrudes in the downward direction 45 from the edge 85 of the condensate protection cover 33.

As shown in the figures, the condensate protection member 73 comprises an inclination 91 with respect to a direction perpendicular to the upward direction 43 or the downward direction 45.

Due to said inclination 91, droplets 71 located on the upper side 75 (also referred to as upward facing side) will be guided by the condensate protection cover 73 from a center portion 93 of the condensate protection member 73 towards a peripheral portion 95 which is located adjacent to the frame walls 35 away from the phase pockets 51.

The droplets 71 may reach the edge 85 of the condensate protection cover 73, wherein the drip edge 87 ensures that the droplets 71 fall off from the condensate protection cover 73 in the peripheral portion 95. This is shown at the left drip edge 87 of Fig. 2. The arrow 97 indicates the position and direction in which the droplets 71 fall off from the condensate protection cover 73.

The condensate protection cover 73 is attached and/or fixed to the upper wall 69 by means of fixation means 99, which are shown in a general manner in Figs. 1 and 2. The fixation means 99 may, for instance, be embodied as screws 101, bolts (not shown), an adhesive (not shown) or a positive lock member 103 (see Fig. 3).

Due to the fixation means 99, the condensate protection cover 73 is located and/or fixed at a distance 105 from the upper wall 69 and/or the access opening 41.

The distance 105 between the condensate protection cover 73 and the upper wall 69 is referred to as first distance 105a, and the distance 105 between the condensate protection cover 73 and the access opening 41 is referred to as second distance 105b. The distance 105 allow for an airflow inside the diving bell lid 27.

In the cut view shown in Figs. 1 and. 2, the fixation means 99 are cut as well. However, if the plane of the cut would be located further into the drawing plane or further out of the drawing plane, no fixation means 99 would be affected by the cut. In between the fixation means 99 located at different depths with respect to a direction out of or into the drawing plane, water sluice ways 107 are provided, which connects an upper volume portion 109 of the diving bell lid 27 located between the condensate protection cover 73 and the upper wall 69 with a lower volume portion 111 of the diving bell lid 27, which is located in the downward direction 45 below the condensate protection cover 73.

In the following, with reference to Figs. 3 to 10, a second 113, third 115 and fourth embodiment 117 of the diving bell lid 27 of the inventive underground link box 1 is shown.

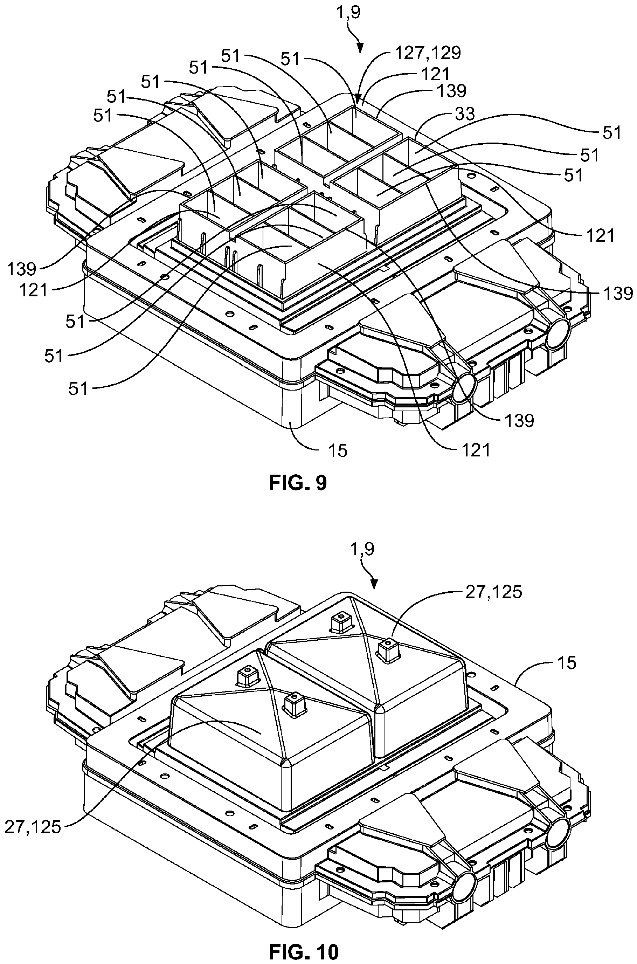

The embodiments 113-117 have in common that, in the assembled state 47 of the diving bell lid 27, the condensate protection cover 73 bears on the frame walls 35 of the inner phase housing 33. As described above, the frame walls 35 form the access opening 41, which is covered by the condensate protection member 73, such that the second distance 105b between the condensate protection cover 73 and the access opening 41 is reduced to zero. The frame walls 35 are indicated only in Fig. 3 and is shown in Fig. 9.

Between the frame walls 35 and the condensate protection cover 73, a sealing agent 119 is provided. This sealing agent 119 seals the inner phase housing 33, in particular the phase pockets 51.

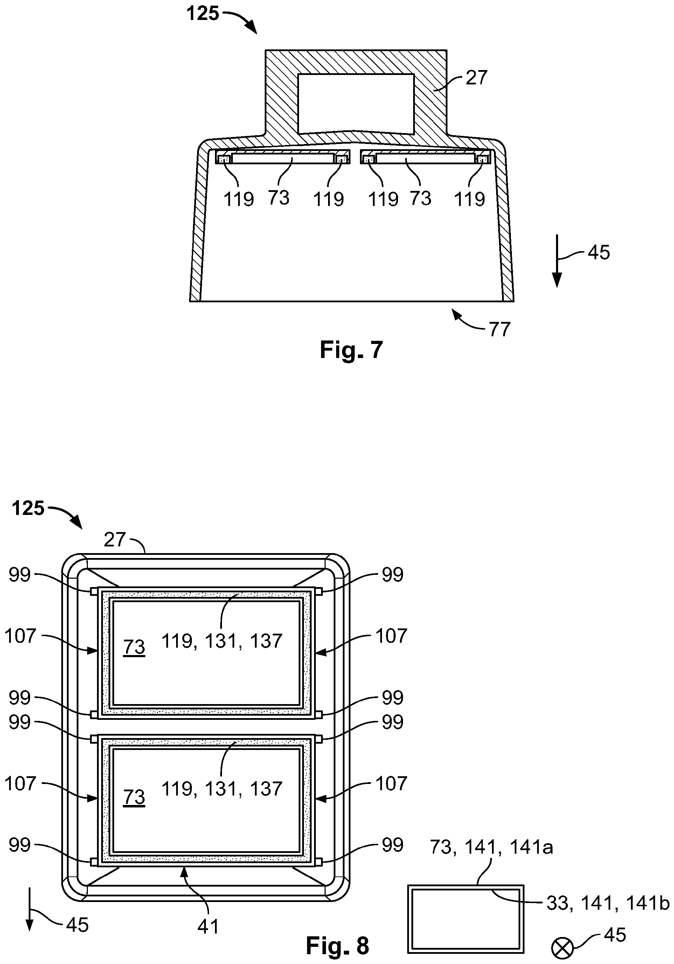

Fig. 8 further shows a footprint 141 of the condensate protection cover 73. The footprint 141 of the condensate protection cover 73 may be considered a first footprint 141a. This first footprint 141a is larger than a second footprint 141b of the inner phase housing 33. This relation is shown in a small schematic drawing below the diving bell lid 27 of Fig. 8. The above footprints 141a and 141b are considered in a projection along the downward direction 45. The footprints 141 are to be understood as base area of the corresponding element and may have a shape different than the rectangle shown here.

Fig. 9 shows an embodiment of the lower housing part 15 of an underground link box 1 being a four-way underground link box 9, in which the inner phase housing 33 provides three phase pockets 51 for each strand (not shown) of the four low-voltage cables (not shown), two of which are received from each side of the underground link box 1. The embodiment shown therefore comprises nine phase pockets 51, wherein three phase pockets 51 form a pocket assembly 121. Each of the pocket assemblies 121 of Fig. 9 thus receives three conductors (not shown) of one of the four low-voltage cables (not shown).

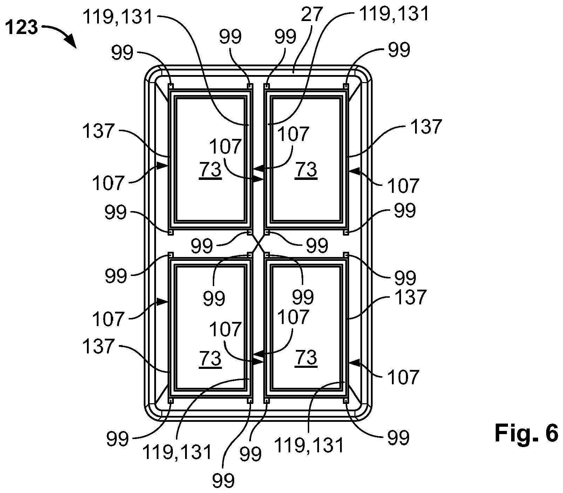

The embodiment of the lower housing part 15 shown in Fig. 9 is adapted to be combined either with the embodiment of the diving bell lid 27 shown in Figs. 5 and 6 or with two diving bell lids 27 shown in Figs. 7 and 8. The latter case is shown in Fig. 10.

Thus, each of the pocket assemblies 121 is sealed by an individual sealing agent 119. In particular, sealing occurs at an upper contour 127 of the pocket assemblies 121 or the inner phase housing 33, respectively. The upper contours 127 in Fig. 9 are four rectangles and represent an upper rim 129 of the frame walls 35. In the figure only one upper contour 127 is provided with a reference numeral.

The sealing agents 119 shown in the figures form a continuous circumferential structure 131, which is best seen in Fig. 4, Fig. 6 and Fig. 8. The continuous circumferential structure 131 or the continuous circumferential structures 131 are preferably complementary to an upper contour 127 of the frame walls 35. This is partially indicated in Fig. 3.

The sealing agents 119 may be received in a groove 133, which is provided in the condensate protection cover 73 and which opens in the downward direction 45.

In the embodiment shown, four individual sealing agents are applied, each of which forms a continuous circumferential substructure 137 (see Fig. 6 and Fig. 8). Those substructures 137 are complementary to a corresponding upper sub-contour 139 (of the pocket assemblies 121) of the frame walls 35

In the case of a four-way single diving bell lid 123 (Fig. 5 and Fig. 6) those are provided in one single diving bell lid 27, whereas in the case of the application of two four-way double diving bell lids 125, each of the two applied diving bell lids 27 comprises two individual sealing agents 119.

In Figs. 3 to 8 different fixation means 99 are shown, exemplarily in the form of a dove tail connection member 135, one provided at the diving bell lid, the other provided at the condensate protection cover 73. In between the dove tail connection members 135, the water sluice way 107 is provided.

### Reference Numerals

- 1: underground link box
- 3: connection means
- 5: low-voltage cable
- 7: grounding cable
- 9: four-way underground link box
- 11: ground level
- 13: backfill/ground
- 15: lower housing part
- 17: upper housing part
- 19: outer housing
- 21: adjacent section
- 23: maintenance manhole/shaft
- 25: manhole cover
- 27: diving bell lid/bell cover
- 29: cast iron
- 31: insulation coating
- 33: inner phase housing
- 35: frame wall
- 37: inner separation walls
- 39: interior
- 41: access opening
- 43: upward direction
- 45: downward direction
- 47: assembled state
- 49: direction of gravity
- 51: phase pocket
- 53: conductors
- 55: electric connection means/links
- 57: busbar
- 59: current bridge
- 61: outside water level
- 63: air
- 65: inner water level
- 67: condensation
- 69: upper wall
- 71: droplet of water
- 73: condensate protection cover
- 75: upper side
- 77: opening
- 79: cover
- 81: plane
- 83: overhang distance
- 85: edge
- 87: drip edge
- 89: protrusion
- 91: inclination
- 93: center portion
- 95: peripheral direction
- 97: arrow
- 99: fixation means
- 101: screw
- 103: positive lock member
- 105: distance
- 105a: first distance
- 105b: second distance
- 107: water sluice way
- 109: upper volume portion
- 111: lower volume portion
- 113: second embodiment
- 115: third embodiment
- 117: fourth embodiment
- 119: sealing agent
- 121: pocket assembly
- 123: four-way single diving bell lid
- 125: four-way double diving bell lid
- 127: upper contour
- 129: upper rim
- 131: continuous circumferential structure
- 133: groove
- 135: dovetail connection member
- 137: continuous circumferential substructure
- 139: upper sub-contour
- 141: footprint

- g: gravity

## Claims

1. Underground link box (1) for connecting and/or switching adjacent sections (21) of at least two low-voltage cables (5), the underground link box (1) comprising
- an outer housing body (19);
- an inner phase housing (33) for receiving electric connection links (55) linking the at least two low-voltage cables (5), the inner phase housing (33) being received within the housing body (19) and having an access opening (41); and
- a diving bell lid (27) arranged between the housing body (19) and the inner phase housing (33), wherein the diving bell lid (27) is open in a downward direction (45), wherein the diving bell lid (27) comprises an upper wall (69) opposite its opening (77), and wherein the diving bell lid (27) is adapted to receive the inner phase housing (33) underneath the upper wall (69),
wherein a condensate protection cover (73) is provided between the access opening (41) of the inner phase housing (33) and the upper wall (69) of the diving bell lid (27) as a cover (79) for the access opening (41), **characterized in that** the condensate protection cover (73) is fixed to the diving bell lid (27).

2. Underground link box (1) according to claim 1, **characterized in that** a footprint (141) of the condensate protection cover (73) is larger than a footprint (141) of the access opening (41) covered by the condensate protection cover (73).

3. Underground link box (1) according to claim 1 or 2, **characterized in that** the condensate protection cover (73) extends beyond the inner phase housing (33) in a plane perpendicular to the downward direction (45).

4. Underground link box (1) according to any one of claims 1 to 3, **characterized in that** the condensate protection cover (73) is located and/or fixed at a distance (105) from the upper wall (69) and/or the access opening (41).

5. Underground link box (1) according to any one of claims 1 to 4, **characterized in that** an upward facing side (75) of the condensate protection cover (73) is inclined with respect to a direction perpendicular to the downward direction (45).

6. Underground link box (1) according to any one of claims 1 to 5, **characterized in that** the condensate protection cover (73) comprises a drip edge (87).

7. Underground link box (1) according to any one of claims 1 to 6, **characterized in that** in an assembled state (47) of the diving bell lid (27), the condensate protection cover (73) bears on frame walls (35) of the inner phase housing (33), the frame walls (35) forming the access opening (41).

8. Underground link box (1) according to claim 7, **characterized in that** at least one sealing agent (119) is provided between the frame walls (35) and the condensate protection cover (73) for sealing the inner phase housing (33).

9. Underground link box (1) according to claim 7 or 8, **characterized in that** the sealing agent (119) forms at least one continuous circumferential structure (131) complementary to an upper contour (127) of the frame walls (35), the upper contour (127) facing towards the diving bell lid (27).

10. Underground link box (1) according to any one of claims 7 to 9, **characterized in that** a footprint (141) of the at least one sealing agent (119) is larger than a footprint (141) of the frame walls (35).

11. Underground link box (1) according to any one of claims 7 to 10, **characterized in that** the at least one sealing agent (119) is received in a groove (133) of the condensate protection cover (73).

12. Underground link box (1) according to any one of claims 7 to 11, **characterized in that** the sealing agent (119) comprises at least one of the following list of sealing members and sealing materials:
- An O-ring;
- RAYGEL^{™};
- A re-usable seal;
- Silicone gel; and
- Rubber.

13. Underground link box (1) according to any one of claims 7 to 12, **characterized in that** a plurality of separate sealing agents (119) is provided, each of which forming a continuous circumferential substructure (137) being complementary to a corresponding upper sub-contour (139) of the frame walls (35).

14. Underground link box (1) according to any one of claims 1 to 13, **characterized in that** at least one water sluice way (107) is provided, which connects an upper volume portion (109) of the diving bell lid (27) located between the condensate protection cover (73) and the upper wall (69) with a lower volume portion (111) of the diving bell lid (27) located in downward direction (45) below the condensate protection cover (73).

## Patentansprüche

1. Unterirdischer Verteilerkasten (1) zum Verbinden und/oder Schalten benachbarter Teilabschnitte (21) wenigstens zweier Niederspannungskabel (5), wobei der unterirdische Verteilerkasten (1) umfasst:
- einen äußeren Gehäusekörper (19);
- ein inneres Phasengehäuse (33) zum Aufnehmen elektrischer Verbindungsglieder (55), die die wenigstens zwei Niederspannungskabel (5) verbinden, wobei das innere Phasengehäuse (33) im Inneren des Gehäusekörpers (19) aufgenommen ist und eine Zugangsöffnung (41) aufweist;
- sowie eine Tauchglocken-Abdeckung (27), die zwischen dem Gehäusekörper (19) und dem inneren Phasengehäuse (33) angeordnet ist, wobei die Tauchglocken-Abdeckung (27) in einer Abwärts-Richtung (45) offen ist, die Tauchglocken-Abdeckung (27) eine obere Wand (69) umfasst, die ihrer Öffnung (77) gegenüberliegt, und die Tauchglocken-Abdeckung (27) so eingerichtet ist, dass sie das innere Phasengehäuse (33) unterhalb der oberen Wand (69) aufnimmt,
wobei eine Kondensatschutz-Abdeckung (73) zwischen der Zugangsöffnung (41) des inneren Phasengehäuses (33) und der oberen Wand (69) der Tauchglocken-Abdeckung (27) als eine Abdeckung (79) für die Zugangsöffnung (41) vorhanden ist, **dadurch gekennzeichnet, dass** die Kondensatschutz-Abdeckung (73) an der Tauchglocken-Abdeckung (27) befestigt ist.

2. Unterirdischer Verteilerkasten (1) nach Anspruch 1, **dadurch gekennzeichnet, dass** eine Grundfläche (141) der Kondensatschutz-Abdeckung (73) größer ist als eine Grundfläche (141) der von der Kondensatschutz-Abdeckung (73) abgedeckten Zugangsöffnung (41).

3. Unterirdischer Verteilerkasten (1) nach Anspruch 1 oder 2, **dadurch gekennzeichnet, dass** sich die Kondensatschutz-Abdeckung (73) in einer Ebene senkrecht zu der Abwärtsrichtung (45) über das innere Phasengehäuse (33) hinaus erstreckt.

4. Unterirdischer Verteilerkasten (1) nach einem der Ansprüche 1 bis 3, **dadurch gekennzeichnet, dass** die Kondensatschutz-Abdeckung (73) in einem Abstand (105) zu der oberen Wand (69) und/oder der Zugangsöffnung (41) angeordnet und/oder befestigt ist.

5. Unterirdischer Verteilerkasten (1) nach einem der Ansprüche 1 bis 4, **dadurch gekennzeichnet, dass** eine nach oben gewandte Seite (75) der Kondensatschutz-Abdeckung (73) in Bezug auf eine Richtung senkrecht zu der Abwärts-Richtung (45) geneigt ist.

6. Unterirdischer Verteilerkasten (1) nach einem der Ansprüche 1 bis 5, **dadurch gekennzeichnet, dass** die Kondensatschutz-Abdeckung (73) eine Tropfkante (87) umfasst.

7. Unterirdischer Verteilerkasten (1) nach einem der Ansprüche 1 bis 6, **dadurch gekennzeichnet, dass** die Kondensatschutz-Abdeckung (73) in einem montierten Zustand (47) der Tauchglocken-Abdeckung (27) auf Verkleidungswänden (35) des inneren Phasengehäuses (33) aufliegt, wobei die Verkleidungswände (35) die Zugangsöffnung (41) bilden.

8. Unterirdischer Verteilerkasten (1) nach Anspruch 7, **dadurch gekennzeichnet, dass** zwischen den Verkleidungswänden (35) und der Kondensatschutz-Abdeckung (73) wenigstens eine Dichtungseinrichtung (119) zum Abdichten des inneren Phasengehäuses (33) vorhanden ist.

9. Unterirdischer Verteilerkasten (1) nach Anspruch 7 oder 8, **dadurch gekennzeichnet, dass** die Dichtungseinrichtung (119) wenigstens eine durchgehende Umfangs-Struktur (131) bildet, die komplementär zu einer oberen Kontur (127) der Verkleidungswände (35) ist, wobei die obere Kontur (127) der Tauchglocken-Abdeckung (27) zugewandt ist.

10. Unterirdischer Verteilerkasten (1) nach einem der Ansprüche 7 bis 9, **dadurch gekennzeichnet, dass** eine Grundfläche (141) der wenigstens einen Dichtungseinrichtung (119) größer ist als eine Grundfläche (141) der Verkleidungswände (35).

11. Unterirdischer Verteilerkasten (1) nach einem der Ansprüche 7 bis 10, **dadurch gekennzeichnet, dass** die wenigstens eine Dichtungseinrichtung (119) in einer Nut (133) der Kondensatschutz-Abdeckung (73) aufgenommen ist.

12. Unterirdischer Verteilerkasten (1) nach einem der Ansprüche 1 bis 7, **dadurch gekennzeichnet, dass** die Dichtungseinrichtung (119) wenigstens eines aus der folgenden Liste von Dichtungselementen und Dichtungsmaterialien umfasst:
- einen O-Ring;
- RAYGEL^{™};
- eine wiederverwendbare Dichtung;
- Silikon-Gel sowie
- Gummi.

13. Unterirdischer Verteilerkasten (1) nach einem der Ansprüche 7 bis 12, **dadurch gekennzeichnet, dass** eine Vielzahl separater Dichtungseinrichtungen (119) vorhanden sind, die jeweils eine durchgehende Umfangs-Teilstruktur (137) bilden, die komplementär zu einer entsprechenden oberen Teilkontur (139) der Verkleidungswände (35) ist.

14. Unterirdischer Verteilerkasten (1) nach einem der Ansprüche 1 bis 13, **dadurch gekennzeichnet, dass** wenigstens ein Wasserschleusen-Weg (107) vorhanden ist, der einen oberen Raumabschnitt (109) der Tauchglocken-Abdeckung (27), der sich zwischen der Kondensatschutz-Abdeckung (73) und der oberen Wand (69) befindet, mit einem unteren Raumabschnitt (111) der Tauchglocken-Abdeckung (27) verbindet, der sich in Abwärts-Richtung (45) unterhalb der Kondensatschutz-Abdeckung (73) befindet.

## Revendications

1. Boîtier de liaison souterrain (1) pour connecter et/ou commuter des sections adjacentes (21) d'au moins deux câbles basse tension (5), le boîtier de liaison souterrain (1) comprenant
un corps de boîtier extérieur (19) ;
un boîtier de phase intérieur (33) pour accueillir des liaisons de connexion électrique (55) liant les au moins deux câbles basse tension (5), le boîtier de phase intérieur (33) étant accueilli au sein du corps de boîtier (19) et présentant une ouverture d'accès (41) ; et
un couvercle de cloche de plongée (27) disposé entre le corps de boîtier (19) et le boîtier de phase intérieur (33), dans lequel le couvercle de cloche de plongée (27) est ouvert dans une direction descendante (45),
dans lequel le couvercle de cloche de plongée (27) comprend une paroi supérieure (69) opposée à son ouverture (77),
et dans lequel le couvercle de cloche de plongée (27) est adapté pour recevoir le boîtier de phase intérieur (33) sous la paroi supérieure (69),
dans lequel un capot de protection contre les condensats (73) est disposé entre l'ouverture d'accès (41) du boîtier de phase intérieur (33) et la paroi supérieure (69) du couvercle de cloche de plongée (27) en tant que capot (79) pour l'ouverture d'accès (41), **caractérisé en ce que** le capot de protection contre les condensats (73) est fixé au couvercle de cloche de plongée (27).

2. Le boîtier de liaison souterrain (1) selon la revendication 1 **, caractérisé en ce qu'**une empreinte (141) du capot de protection contre les condensats (73) est plus grande qu'une empreinte (141) de l'ouverture d'accès (41) couverte par le capot de protection contre les condensats (73).

3. Le boîtier de liaison souterrain (1) selon la revendication 1 ou 2, **caractérisé en ce que** le capot de protection contre les condensats (73) s'étend au-delà du boîtier de phase intérieur (33) dans un plan perpendiculaire à la direction descendante (45).

4. Le boîtier de liaison souterrain (1) selon l'une quelconque des revendications 1 à 3, **caractérisé en ce que** le capot de protection contre les condensats (73) est installé et/ou fixé à une distance (105) de la paroi supérieure (69) et/ou de l'ouverture d'accès (41).

5. Le boîtier de liaison souterrain (1) selon l'une quelconque des revendications 1 à 4, **caractérisé en ce que** un côté orienté vers le haut (75) du capot de protection contre les condensats (73) est incliné par rapport à une direction perpendiculaire à la direction descendante (45).

6. Le boîtier de liaison souterrain (1) selon l'une quelconque des revendications 1 à 5, **caractérisé en ce que** le capot de protection contre les condensats (73) comprend une arête d'égouttement (87).

7. Le boîtier de liaison souterrain (1) selon l'une quelconque des revendications 1 à 6, **caractérisé en ce que** dans un état assemblé (47) du couvercle de cloche de plongée (27), le capot de protection contre les condensats (73) repose sur des parois de structure (35) du boîtier de phase intérieur (33), les parois de structure (35) constituant l'ouverture d'accès (41).

8. Le boîtier de liaison souterrain (1) selon la revendication 7, **caractérisé en ce qu'**au moins un agent d'étanchéité (119) est disposé entre les parois de structure (35) et le capot de protection contre les condensats (73) pour étanchéifier le boîtier de phase intérieur (33).

9. Le boîtier de liaison souterrain (1) selon la revendication 7 ou 8, **caractérisé en ce que** l'agent d'étanchéité (119) constitue au moins une structure circonférentielle continue (131) complémentaire à un contour supérieur (127) des parois de structure (35), le contour supérieur (127) étant orienté vers le couvercle de cloche de plongée (27).

10. Le boîtier de liaison souterrain (1) selon l'une quelconque des revendications 7 à 9, **caractérisé en ce qu'**une empreinte (141) de l'au moins un agent d'étanchéité (119) est plus grand qu'une empreinte (141) des parois de structure (35).

11. Le boîtier de liaison souterrain (1) selon l'une quelconque des revendications 7 à 10, **caractérisé en ce que** l'au moins un agent d'étanchéité (119) est accueilli dans une gorge (133) du capot de protection contre les condensats (73).

12. Le boîtier de liaison souterrain (1) selon l'une quelconque des revendications 7 à 11, **caractérisé en ce que** l'agent d'étanchéité (119) comprend au moins un de la liste suivante d'éléments d'étanchéité et de matériaux d'étanchéité :
- un joint torique ;
- du RAYGEL^{™} ;
- un joint réutilisable ;
- du gel silicone ; et
- du caoutchouc.

13. Le boîtier de liaison souterrain (1) selon l'une quelconque des revendications 7 à 12, **caractérisé en ce qu'**une pluralité d'agents d'étanchéité (119) distincts est disposée, dont chacun constitue une sous-structure circonférentielle continue (137) étant complémentaire d'un sous-contour supérieur correspondant (139) des parois de structure (35).

14. Le boîtier de liaison souterrain (1) selon l'une quelconque des revendications 1 à 13, **caractérisé en ce qu'**au moins une conduite d'éclusage (107) est installée, qui connecte une partie de volume supérieur (109) du couvercle de cloche de plongée (27) située entre le capot de protection contre les condensats (73) et la paroi supérieure (69) avec une partie de volume inférieur (111) du couvercle de cloche de plongée (27) située dans une direction descendante (45) sous le capot de protection contre les condensats (73).
